Europäisches Patentamt

European Patent Office

Office européen des brevets

(11) Publication number: **0 180 301 B1**

# EUROPEAN PATENT SPECIFICATION

(45) Date of publication of patent specification: **21.11.91**

(21) Application number: **85305948.3**

(22) Date of filing: **21.08.85**

(51) Int. Cl.5: **B23K 3/02, H05B 3/00, H01F 5/00, H05B 6/02, B23K 3/04**

(54) **High efficiency autoregulating heater.**

(30) Priority: **30.10.84 US 666346**

(43) Date of publication of application:
**07.05.86 Bulletin 86/19**

(45) Publication of the grant of the patent:
**21.11.91 Bulletin 91/47**

(84) Designated Contracting States:
**AT BE CH DE FR GB IT LI NL SE**

(56) References cited:
**EP-A- 0 107 927
EP-A- 0 110 692
WO-A-82/03305
WO-A-84/02098**

**MACHINE DESIGN, vol. 56, no. 7, April 1984, page 42, Cleveland, Ohio, US; "Scanning the field for ideas"**

(73) Proprietor: **METCAL INC.
3704 Haven Court
Menlo Park California 94025(US)**

(72) Inventor: **Carter, Philip S., Jr.
221 Iris Way
Palo Alto California 94303(US)**

(74) Representative: **Hayward, Denis Edward Peter et al
Lloyd Wise, Tregear & Co. Norman House
105-109 Strand
London WC2R 0AE(GB)**

## Description

The present invention relates to autoregulating electric heaters and more particularly, to an electromagnetic autoregulating electric soldering iron having substantially constant temperature regulation and high efficiency at quite reasonable prices.

In U.S. Patent No. 4,256,945 of Carter and Krumme, there is described an autoregulating electric heater having a laminated structure; one lamina of which has high magnetic permeability and high resistance and another lamina of which is non-magnetic and has a low resistance (such as copper) in electrical contact, and therefore, thermal contact with the first lamina. This structure is adapted to be connected across a constant current, a.c., source such that the layers are in a sense in parallel across the source.

Due to skin effect, the current is initially confined to the high magnetic permeability, high resistance layer so that $P = KR_1$ where P is Power, K is $I^2$ which is a constant, and R is the effective resistance of the permeable material at high current concentrations. The dissipation of power heats the layer until it approaches its Curie temperature. The permeability of the lamina decreases towards the level of the second layer, copper for instance, at about its Curie temperature. The current is no longer confined to the high resistivity first lamina by the magnetic properties of the first lamina, and spreads into the copper layer; the resistance to the current drops materially, the power consumed, $p = KR_2$ where $R_2 \ll R_1$, is greatly reduced and the heating effect is reduced to a level that maintains the device at or near the Curie temperature. The device thus thermally autoregulates over a narrow temperature range about the Curie temperature.

The current source employed in the aforesaid patent is typically a high frequency source, to insure that the current is confined to the thin, high resistivity, magnetic layer until the Curie temperature of the magnetic material is attained. Specifically, the maximum regulation is achieved when the thickness of the magnetic layer is of the order of one skin depth at the frequency of operation. Under these circumstances, the maximum change in effective resistance of the structure is achieved at or about the Curie temperature. This fact can be demonstrated by reference to the equation for skin depth in a monolithic, i.e., non-laminar magnetic structure:

$$S.D. = 5030 \sqrt{\frac{\rho}{\mu f}} \text{ cm,}$$

where $\rho$ is the resistivity of the material in ohm-cms, $\mu$ is magnetic permeability mu and f is frequency of the current. The field falls off in accordance with $e^{-x}$ where x is thickness/skin depth. Accordingly, in a monolithic structure, by calculation, 63.2% of the current is confined to one skin depth in the high mu material. In the region of the Curie temperature, where $\mu = 1$, the current spreads into a region

$$S.D. = 5030 \sqrt{\frac{\rho}{\mu f}} \text{ cm.}$$

If mu was originally equal to 200(200-5000 being possible), the skin depth in the region at the Curie temperature increases by the square root of 200; i.e., the skin depth in the monolithic structure is now 14.14 times greater than with $\mu = 200$.

The same type of reasoning concerning the skin effect may be applied to the two layer laminar structure in the aforesaid patent. Below the Curie temperature, the majority of the current flows in the magnetic layer when the thickness of this layer is nominally one skin depth of the material below the Curie temperature. In the region of the Curie temperature, the majority of the current now flows in the copper and the resistance drops dramatically. If the thickness of this high mu material were greater than two skin depths, the percentage change of current flowing in the high conductivity copper would be less and the resistivity change would not be as dramatic. Similarly, if the thickness of the high mu material were materially less than one skin depth, the percentage of current flowing in the high resistivity material at a temperature less than the Curie temperature would be less so that the change of resistance at the Curie temperature would again not be as dramatic. The region of 0.5 to 1.8 skin depths is preferred.

An exact relationship for the two layer case is quite complex. The basic mathematical formulas for surface impedance from which expressions can be obtained for the ratio of the maximum resistance, $R_{max}$, below the Curie temperature, to the minimum resistance, $R_{min}$, above the Curie temperature, are given in Section 5.19, pp. 298-303 of the standard reference, "Fields and Waves in Communications Electronics,"

2

3rd Edition, by S. Ramo, J.R. Winnery, and T. VanDuzer, published by John Wiley and Sons, New York, 1965. Although the theory described in the above reference is precise only for the case of flat layers, it is still accurate enough for all practical applications in which the skin depth is substantially less than the radius of curvature.

Difficulty may arise in such devices when the Curie temperature is achieved due to spread of the current and/or magnetic flux into adjacent regions outside of the device, particularly if the device is located close to sensitive electrical components.

In U.S. Patent No. 4701587 of Carter and Krumme, there is described a mechanism for preventing the high frequency field generated in the heated device from radiating into the regions adjacent the device. This effect is accomplished by insuring that the copper or other material of high conductivity is sufficiently thick, several skin depths at the frequency of the source, to prevent such radiation and electrical field activity. This feature is important in many applications of the device such as a soldering iron where electromagnetic fields may induce relatively large currents in sensitive circuit components which may destroy such components.

In accordance with U.S. Patent No. 4695713 of John F. Krumme, a relatively low frequency constant current source may be employed as a result of fabricating the normally non-magnetic, low resistivity layer from a high permeability, high Curie temperature material. Thus, the device comprises a high permeability, high resistivity first layer adjacent the current return path and a high permeability, preferably low resistivity second layer remote from the return path; the second layer having a higher Curie temperature than the first-mentioned layer.

The theory of operation underlying the invention of U.S. Patent No. 4695713 is that by using a high permeability, high Curie temperature material as the low resistivity layer, the skin depth of the current in this second layer is such as to confine the current to a quite thin layer even at low frequencies thereby essentially insulating the outer surfaces electrically and magnetically but not thermally with a low resistivity layer of manageable thickness. The second layer is preferably formed of a low resistivity material, but this is not essential.

The power regulation ratios (AR) in such a device; 2:1 to 4:1, are not as high as with the device of the patent with a resistivity difference of about 10:1, but the AR difference may be reduced by using material of higher and lower resistivities for the lower Curie temperature and high Curie temperature materials, respectively. Also, a high mu, relatively low resistivity material such as iron or low carbon steel may be employed to further increase the power regulation ratio.

In accordance with the invention of EP 0110692 autoregulating power ratios of 6:1 to 7:1 are attained while retaining the ability to utilize low frequency supplies without producing unacceptable levels of field radiation.

The objects of the invention are achieved by providing a region of high conductivity at the interface of the two members having high permeability as set forth in the Krumme Patent U.S. No. 4695713.

The material in the interface region may be copper, for instance, or other highly conductive material. The material may appear as a separate layer, a sandwich of magnetic, non-magnetic and magnetic material or may be bonded to the high and/or low Curie temperature, ferromagnetic layers at the interface to provide a low resistivity, interface region.

With autoregulating ratios of 6:1 and 7:1, the heating variations below and above Curie temperature are quite large so that the apparatus may respond rapidly to thermal load variations and thus maintain accurate temperature regulation in a small device operating at low frequency.

A difficulty is encountered when any of the above heaters are employed in soldering irons such as illustrated in Fig. 4 of the aforesaid patent US 4256945. The impedance of the soldering iron, due to its relatively small size, is quite low (of the order of 0.1 to 0.25 ohm) and in consequence, presents a poor impedance match to the source. This problem is mitigated to some extent by including impedance matching circuits in the handle of the soldering iron. In such a case, however, a greater resistance appears in the handle than at the tip of the iron, making the handle quite hot and the overall soldering iron performance quite inefficient; i.e., more energy is dissipated in the handle than in the iron.

In WO-84/02098 there are disclosed many embodiments of apparatus for connecting conductors, pipes and the like by means of fusible or heat-shrinkable materials, included amongst which are:

   i) an arrangement in which two pipes are jointed by a surrounding tubular sleeve of heat-shrinkable plastics material, which may either contain included particles of ferromagnetic material or be contiguously encircled by a secondary inductor of magnetic material, electric current being induced to flow circumferentially around the sleeve or the secondary inductor by current flow in a surrounding primary coil, sheathed by an insulating covering, that is wound in successive helical turns around the sleeve; and

   ii) an arrangement in which fusible material is melted to connect a pair of conductors by means of heat generated by current flow in a multi layer tubular structure including two contiguous concentric layers of ferromagnetic materials having different resistivities and different permeabilities, the tubular structure being surrounded by an energising primary winding wound in a succession of helical turns around it. However, there is no recognition or discussion of the problem of impedance matching nor is there any suggestion to couple a primary winding and a secondary inductor in the form of a sleeve so closely that the current in the inductor sleeve is constrained to follow a long repeatedly circuitous or helical path.

It is an object of the present invention to provide an auto-regulating heater, suitable for a soldering iron, with a relatively high impedance.

It is another object of the present invention to provide an auto-regulating soldering iron having high efficiency.

Still another object of the present invention is to provide an auto-regulating soldering iron having a relatively high impedance and an impedance matching circuit; the combination of which produces a highly efficient soldering iron.

According to the invention, a temperature auto-regulating heater comprises

a layer of magnetic, and in particular high permeability, material,

an electrical conductor wound as an energising winding in a succession of turns about said layer, either internally or externally, for inducing current in said layer when alternating electric current is caused to flow in said conductor, and

means adapted to apply an alternating current to said conductor to heat said magnetic material to a temperature approaching its Curie temperature, characterised in that said electrical conductor winding and said magnetic material layer are in such close proximity that the coupling between the turns of the energising winding and said magnetic layer is adapted to constrain the current flowing in said layer to a long repeatedly circuitous path whereby the impedance of the heater is greatly increased, in the interest of impedance matching, at least below the Curie point of the magnetic material.

The high mu material may be the sole other conductor or may be of the type disclosed in any one of the aforesaid patents. More specifically, in a preferred arrangement of heater embodied in a soldering iron, the heater has a hollow cylindrical outer laminated member, terminating in the tip of the iron, and a cylindrical inner member. The inner member is ceramic or other heat insensitive material having a helical conductor formed on its outer surface. The outer member has a high mu material inner cylinder and a low resistance conductor, such as copper, disposed about and in contact with the high mu material. The cylindrical conductor and high mu material are insulated from one another except that the end of the helical conductor and the outer laminated member are connected together electrically at the tip of the iron. A source of constant current, as hereinafter defined, is connected between the conductor of the inner member and the outer member at the end remote from the iron's tip.

The insulation between the helical conductor and the high mu material is quite thin so that unity coupling of flux between the helix and the mu material is almost realised. In consequence, the current flowing in the latter material is confined to a helical path greatly increasing the length of the path of the current through the high resistance material and increasing the effective resistance thereof. Another factor increasing resistance of the device is the transformer coupling between the helix and the high mu material, whereby impedance of the secondary circuit (outer conductor) is reflected back into the primary circuit as the square of the turns ratio, i.e.

$$R_p = \left(\frac{N_p}{N_s}\right)^2 R_s;$$

where the subscripts stand for primary and secondary, and the secondary has only a single turn. Impedances as high as 6 ohms have been developed at the input of the heater element by this method; an increase over non-helical couplings of 15 to 60 times.

It is noted that in the above description, transformer action is described although the primary and secondary are electrically in series across the source. The action in such a case is comparable to that of an autotransformer whereas the device may be built as a transformer having totally separate windings.

In a preferred embodiment of the soldering iron of the present invention, the tip of the soldering iron has a rearward, preferably cylindrical, extension having magnetic material, a magnetic sleeve, clad thereon. The magnetic sleeve is surrounded by an insulating layer which has a coil of one or more layers wound thereon. The coil is surrounded by a second magnetic sleeve to magnetically shield the coil from the surrounding regions.

The coil and the inner magnetic sleeve are preferably not connected together so that the coil serves as the primary winding of a transformer and the inner magnetic sleeve serves as a secondary winding together with the adjacent copper cylinder.

The resistance reflected into the primary winding (coil) is increased again by the turns ratio of the transformer and by the increase in the resistance of the secondary winding as a result of the helical path followed by the current in that winding. The increase in number of turns of the primary winding in the preferred embodiment permits excellent impedance matching of the to the source.

Efficiencies in autoregulating systems of the type with which the present invention is concerned vary with temperatures above and below the autoregulating temperature. For maximum efficiency, the impedance that the iron presents to the end of the cable should be $50 + jo$ ohms for a $50$ ohm cable, whereby little of the energy delivered to the load below Curie temperature is reflected. In order to achieve an approach to such a requirement, in the prior devices, impedances in the form of RLC networks were placed in the handle of the iron. The problem with such approach was that with very low impedance in the heating element, large impedances had to be placed in the handle and more heat was dissipated in the handle than in the heating element; a near impossible situation.

In accordance with the present invention, the increase in heater resistance as indicated above, greatly mitigates the prior art problem.

In a further feature of the invention employed in the first embodiment of the heater, an impedance matching circuit in the handle of the iron is greatly simplified and dissipates relatively little energy. One such circuit is a parallel resonant circuit constituting an inductance connected in series with the heater and a capacitor connected in parallel with the inductance and heater series circuit. The inductance is, in one embodiment, an iron dust inductor; such an inductor providing high inductances in a small size and with very low iron losses; i.e., eddy current losses. With such a device, efficiencies of 96-97% are achievable below autoregulating temperatures. Above the autoregulating (Curie) temperature, the efficiency falls to about 80%, at worst. In a recent engineering model, the impedances below and above Curie temperature were $60.4 + j5.8$ and $44.7 - j90.9$, respectively, with VSWRs of 1.24 and 5.5, respectively. Thus, the loaded VSWR was about 1.24; the VSWR when the maximum energy is being delivered.

In the preferred embodiment of this invention, the impedance matching network is still further simplified. The resistance is brought up to $50$ ohms by the transformer action and all that is required is a series capacitor to buck out the inductance of the circuit.

In a modification of the preferred embodiment the inner and outer magnetic sleeves are bridged at one end by a magnetic layer deposited on the back of the tip of the iron and may also be bridged at the other ends by an end cap for reasons to be described subsequently.

Although throughout the description reference is made to a soldering iron or iron, it is to be understood that the present invention is applicable to any type of heater of the type to which the present invention relates and which otherwise would have a very low resistance.

Embodiments of the invention will now be described in more detail, by way of example, in conjunction with the accompanying drawings, wherein:

Fig. 1 is a view in cross-section of a first embodiment of the heater of the present invention.

Fig. 2 is a view in cross-section of a second embodiment of the heater of the present invention.

Fig. 3 is a circuit diagram of a first embodiment of a heater and impedance matching circuit of the present invention.

Fig. 4 is a plot of the efficiency of the soldering iron of the present invention as a function of various circuit impedances.

Figure 5 is a cross-sectional view of the preferred embodiment of the present invention; and

Figure 6 is a cross-sectional view of a modification of the embodiment of Figure 5 hereof.

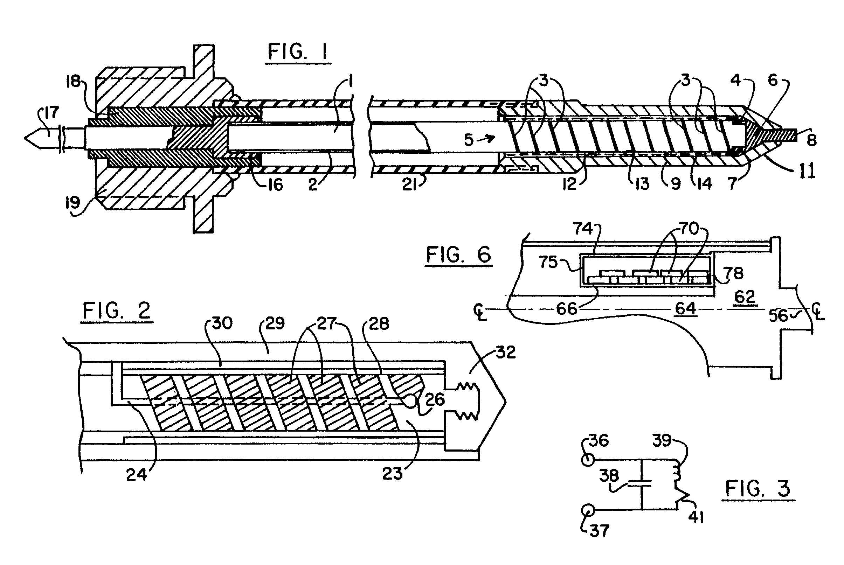

Referring now specifically to Fig. 1 of the accompanying drawing, there is illustrated one embodiment of the present invention.

A ceramic or the like rod 1 is coated with a thin coating 2 of copper or like material. The coating 2 is etched or otherwise removed to provide a helix 5 of copper composed of multiple turns 3. The ceramic rod is provided with a region 4 of reduced diameter at its right end as viewed in Fig. 1 to accept a conductive end cap 6 comprising a hollow cylindrical portion 7 that extends over the region 4 of the rod 1 and terminates at its right end in a solid conductive rod 8.

The rod 1 is surrounded by a hollow conductive cylinder 9 having a tapered (conical) right end forming the tip 11 of the soldering iron. The rod 8 of the end cap 6 extends through the tip 11 of the iron and is suitably secured thereto as by high temperature brazing, as an example.

The hollow cylinder 9 has an inner cylindrical wall 12 lined with a high mu material 13 such as Alloy 42. A thin layer 14 of high temperature insulation, such as Kapton, is disposed between the helix 5 and the

EP 0 180 301 B1

material 13.

Completing the description of the structure of this embodiment of the invention, the rod 1, at its left end is enclosed with a contact 16 that terminates in a male coax terminal 17. The contact 16 is surrounded by an insulator 18 which in turn is surrounded by outer electrical terminal 19. A hollow conductive sleeve 21 is threaded at its right end to the left end, all as viewed in Fig. 1, of the cylinder 9 and at its left end, lies between and in contact with insulator 18 and outer terminal 19. Thus, the electrical circuit extends from contact 17 through copper layer 2, turns 3 of the helix 5, end cap 6, sleeve 12 and high mu material 13 of cylinder 9, and sleeve 21 to outer terminal 19.

In operation, voltage is applied across terminals 17 and 19 to cause current to flow in the circuit. The magnetic field established by the current flowing through the helix 5 constrains the current flowing in the high mu material 13 to follow a helical path greatly increasing the length of the current path through the material 13.

In order to enhance the effect of the magnetic field on current flow in the elements 13 and 9, an attempt is made to approach unity coupling between the turns 3 and the high mu sleeve 13. The coupling is enhanced by establishing the ratio of the width of each turn 3 to the spacing between the turns 3 and the high mu material 13 at, at least, and preferably greater than 4.

With a coupling approaching unity, the transformer equation for impedance reflected from the secondary into the primary winding is essentialy valid. Thus, if 1∅ turns 3 of the helix are provided while the mu material 13 constitutes a single turn, the impedance of the mu metal is enhanced a hundredfold in the circuit.

The spacing between the turns of the helix should be such as to define a capacitance between turns that determines a resonant frequency of the heater well above the frequency of the source which latter frequency may be as high as 2∅ MHz or higher.

Referring to Fig. 2 of the accompanying drawings, there is illustrated an embodiment of the invention employing a transformer having separated primary and secondary windings. In such an arrangement, the only basic modification of the apparatus of Fig. 1 is in the heater area. Ceramic rod 23 is center drilled to accept a conductive rod 24 that connects at 26 to helix 27. The helix 27 is enclosed within a thin insulating sleeve 28 which itself is enclosed within a hollow cylinder 29. The hollow cylinder 29 has an inner cylindrical wall 3∅ composed of high mu material such as Alloy 42. The outer portion of cylinder 29 is a highly conductive material such as copper. The cylinder 29 has an end cap 32 that threads on to the rod 23, in the process contacting the end of the cylinder 30. The left end of the conductive rod 24 is connected by means of a radial hole in the ceramic rod, to the cylinder 29.

As previously indicated, the transformer action of the embodiments of Figs. 1 and 2 coupled with the elongated path induced in the high mu material greatly increases the impedance of the heater; raising it to 3 to 6 ohms. In order to match the load to the 5∅ ohms of the source, an impedance matching circuit is employed and is usually located in the handle of the iron.

In this apparatus, impedance matching is achieved by the use of a parallel resonant circuit as illustrated in Fig. 3 of the accompanying drawings. Terminals 36 and 37 are connected via a coax cable, for instance, to the energy source of the system, a constant current source. Typically, the characteristic impedances of the cable and the source are 50 ohms. In one form of the present invention, the source operates at 13.5 MHz. Capacitor 38 is connected across terminals 36 and 37 and an inductor 39 is connected in series with the heater 41 of the iron across the capacitor 38.

The capacitor 38, the inductor 39, and the heater 41, provide a parallel resonant or tank circuit of low Q, preferably not greater than 4.5. It is known that to a good approximation $R_e = Q^2 R_a$ at the unity power factor frequency, where $R_e$ is the effective resistance appearing across terminals 36 and 37, Q is the Q of the circuit at its resonant frequency and $R_a$ is the actual resistance of the heater 41, plus the resistance of the tuning inductor 39, approximately 2 to 6 ohms in the present case. Applying the above formula to a case where the heater resistance is 4.7 ohms and the inductor resistance is 0.3 ohms, we have $R_a$ equal to 5 ohms, and

$$50 = Q^2 \times 5$$
$$Q = \sqrt{10}.$$

It is readily evident that the increase in resistance of the tip has greatly decreased the Q required in the impedance matching circuit and also greatly reduced the current in the impedance matching circuit and the heater. Thus, a far greater proportion of the energy is dissipated in the heater 41 than in the elements 38 and 39, contrary to the case with an iron of materially less resistance.

6

The inductance 39 may be realised by the use of an iron dust inductor. Such a device is filled with iron dust in which each particle is coated with insulation whereby eddy current losses are minimised. Such an inductor, for the purpose of the present apparatus, preferably takes the form of a cylinder with an axial hole through which extends one of the wires to the iron. Thus, the inductor is quite small, may readily fit in the handle of the iron and produces little heat. A ¾ inch (1.9cm) diameter handle may readily accept the capacitor 38 and inductor 39.

As previously indicated, the impedance of one embodiment of Fig. 3 of the accompanying drawings was 60.4 + j5.8 ohms and had a VSWR of 1.24 both thermally loaded and unloaded below the Curie temperature. When autoregulating, i.e., above Curie temperature, the impedance both loaded and unloaded became 44.7 + j90.9 with a VSWR of 5.5. These latter figures are acceptable particularly since they only occur during the low energy condition of the system; i.e., when IR losses are at their lowest. Efficiencies for the two conditions are roughly 96-97% and 80%, at worst, respectively.

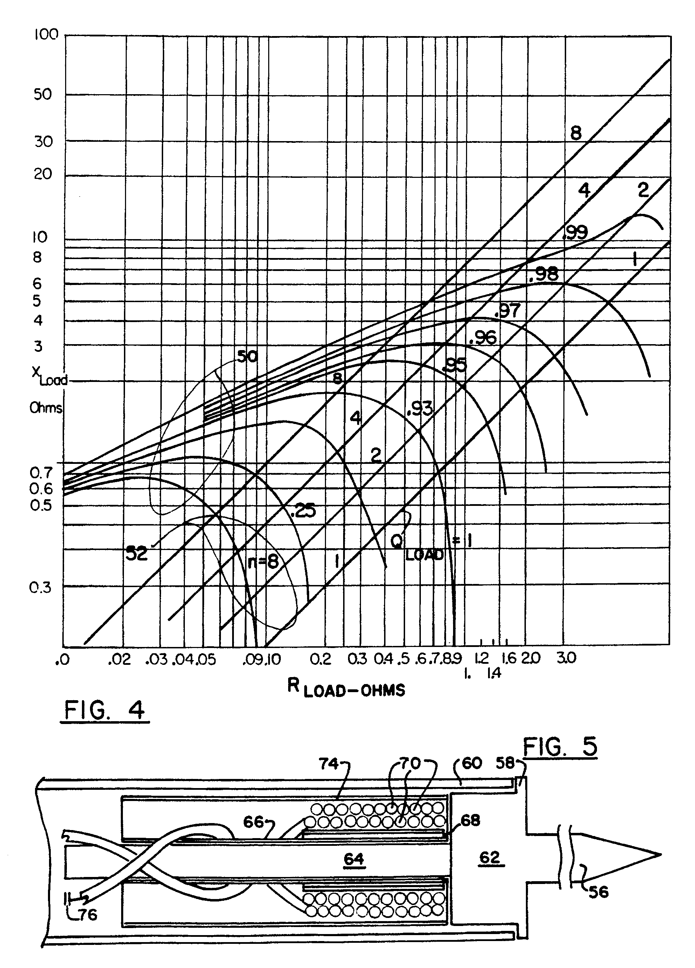

Reference is now made to Fig. 4 of the accompanying drawings which is a graph primarily of the performance of the embodiment of Fig. 3 of the accompanying drawings. In this graph, and considering the heater 41 as a load having both resistance and reactance, $X_{Load}$ is the inductive reactance of the heater 41, $R_{Load}$ is the resistance of the heater 41, $X_T$ is the inductive reactance of the inductor 39, $R_T$ is the resistance of inductor 39, and the coil Q of this inductor, which preferably should lie in the range of 50-250, is in this instance 100; $Q_{Load}$ is $X_{Load}/R_{Load}$ and efficiency, $\eta$, is $R_{Load}/(R_{Load} + R_T)$.

Referring again to Fig. 4, the efficiencies are plotted by the group of curves 50 and the $Q_{Loads}$ are plotted by curves 52. Before discussing the details of the graph, it should be noted that the Q's of the load prior to the improvements illustrated in Fig. 1 were about 6. The present apparatus, due to the increase in effective resistance, decreases the coil Q of the load to about 2-3 and a coil Q as low as approximately 1.5 can be achieved.

The graph illustrates the fact that with a load resistance of 0.1 ohms (a prior attempt at fabricating an iron) the maximum efficiency achievable was about 84% and at 0.25 ohms was about 91.5%. With the soldering iron of the present invention, heater plus matching circuit, the efficiencies achievable at 3 to 6 ohms are about 98%.

Referring now specifically to Figure 5 of the accompanying drawings there is illustrated a preferred embodiment of the present invention. Again the heater is illustrated in a soldering iron environment but the principles of operation are applicable to heaters in general.

The soldering iron has a tip 56 having a shoulder 58 seated against an outer preferably non-magnetic stainless steel sleeve 60. The shoulder 58 has an extension 62 seated within the sleeve 60, the extension 62 having a cylindrical rod 64 extending in a direction opposite from the tip 56.

Deposited on or otherwise disposed about the rod 64 is a thin layer 66 of magnetic material such as Alloy 42. A layer 68 of Kapton type or the like may be wrapped about layer 66 and a coil 70 is wrapped about the tape 68 and layer 66. Alternatively, the wires of the coil 70 may be coated with high temperature insulation and directly applied to the layer 66 adjacent the extension 62. A further magnetic sleeve 74 is disposed about the coil 70 and appropriately secured in place.

The coil 70 is preferably formed of relatively thin flat rectangular wire in multiple layers which serves basically the same function as the helical conductor 3 of Figure 1 in that as a transformer it raises the impedance of the secondary reflected in the primary circuit and directly increases the impedance of the secondary circuit by defining a helical current path in the secondary winding, i.e. layer 66.

The device operates as an autoregulating heater in that upon the magnetic layer being raised to a point where it approaches its Curie temperature, it becomes virtually non-magnetic and the secondary current reduces and also spreads into the rod 64 which may be copper or a like material. Heating is reduced, temperature falls and the permeability of layer 66 is reestablished.

The sleeve 74 is employed to isolate the coil 70 from the sleeve 60. The sleeve 60 is a relatively good conductor and would serve to at least partially short circuit the secondary of the transformer if not isolated from coil 70 by the sleeve 74 of magnetic material. The stainless steel sleeve 60 serves to isolate the outside world from any residual high frequency fields that might otherwise be radiated from the structure.

The magnetic layer 74 preferably remains magnetic at all times and may, if necessary, have a higher Curie temperature than sleeve 66 if insufficient cooling is available.

As a result of the greatly increased resistance of the secondary as reflected into the primary circuit, a simple solution to the matching problems discussed above, is available. The resistances can be readily made to achieve 50 ohms as seen in the primary circuit below Curie temperature. Thus all that is necessary to achieve matching is a series capacitor, such as capacitor 76 in Figure 5 utilized to match the inductance primarily of the coil 70.

Referring now to Figure 6 of the accompanying drawings, the same reference numerals are employed as in Figure 5. In this modification of the structure of Figure 5, a further magnetic layer 78 is deposited on the surface of the extension 62 from which the rod 64 extends. This layer is employed to make the layers 66 and 74 continuous between their ends adjacent the extension 62. An end cap 75 of magnetic material or other metal with a magnetic coating, bridges the layers 66 and 74 at their ends remote from the extension 62. The advantage of this construction relates to the fact that the intrinsic permeability of a material may not be realized in all structures. Specifically, if the magnetic layer is completely closed then the intrinsic permeability of the magnetic material may be realized. If, however, the magnetic layer has exposed edges then the instrinsic permeability cannot be realized. The equation for the relationship between intrinsic and effective permeability for a rectangle is extremely complex but can be approximated by the following equation for an ovoid.

$$\mu_E = \mu_I \; \frac{1}{1 + \mu_I \; \left(\dfrac{t}{w+t}\right)}$$

where $\mu_E$ is effective permeability, $\mu_I$ is intrinsic permeability, t is thickness and w is width. The table below illustrates the effect of both permeability and the w/t ratio on the effective permeability.

| $\mu_I$ | 200 | 400 |
|---|---|---|
| w/t | | |
| 10 | 10 | 10 |
| 25 | 23 | 24 |
| 50 | 41 | 44 |
| 100 | 67 | 80 |
| 200 | 100 | 133 |
| 300 | 120 | 171 |
| 400 | 133 | 200 |
| 500 | 143 | 227 |
| 1000 | 167 | 286 |

Thus it is seen that the greater the ratio the higher the effective permeability and the lower the permeability the higher the ratio $\mu_E/\mu_I$. For instance, the ratio $\mu_E/\mu_I$ for w/t equal to 1000 is 0.835 for a permeability of 200 but is only 0.715 for a permeability of 400.

In the present case, with a thickness of the magnetic layer of 0.0003 inch (0.0076 mm) and a length of the inner layer 66 of approximately 1/2 inches (1.3 cm), the ratio is 1660 to 1 and the effective permeability of the Alloy 42 is 178.6. If, however, the sleeves 66 and 74 are bridged by end caps of several skin depths thickness on both ends, the effective permeability is equal to the intrinsic permeability.

The term "constant current" as employed herein does not mean a current that cannot increase, but means a heater current magnitude I that obeys the following formula:

$$\frac{\Delta I}{I} > -\; 1/2 \; \frac{\Delta R}{R}$$

Specifically, in order to autoregulate, the power delivered to the load when the heater exceeds Curie temperature, must be less than the power delivered to the load below Curie temperature. If the current is held invariable, then best autoregulating ratio is achieved short of controlling the power supply to reduce current. So long, however, that the current is controlled in accordance with the above formula, autoregulation is achieved. Thus, when large autoregulating ratios are not required, constraints on the degree of current control may be relaxed thus reducing the cost of the power supply.

The above equation is derived by analyzing the equation:

$P = I^2R$, where P is power.

Differentiating P with respect to R

$$\frac{dP}{dR} = I^2 + 2RI \left(\frac{dI}{dR}\right).$$

to satisfy the requirements for autoregulation

$$\frac{dP}{dR} > 0.$$

Thus,

$$I^2 + 2RI \left(\frac{dI}{dR}\right) > 0 ,$$

which reduces to the above equation.

## Claims

1.  A temperature auto-regulating heater comprising
    a layer (13,30,66) of magnetic, and in particular high permeability, material,
    an electrical conductor wound as an energising winding (5,27,70) in a succession of turns (3) about said layer, either internally or externally, for inducing current in said layer when alternating electric current is caused to flow in said conductor, and
    means adapted to apply an alternating current to said conductor to heat said magnetic material to a temperature approaching its Curie temperature, characterised in that said electrical conductor winding and said magnetic material layer are in such close proximity that the coupling between the turns of the energising winding and said magnetic layer is adapted to constrain the current flowing in said layer to a long repeatedly circuitous path whereby the impedance of the heater is greatly increased, in the interest of impedance matching, at least below the Curie point of the magnetic material.

2.  A heater according to Claim 1, wherein said layer of magnetic material is configured as a tube and said winding is wound to be coaxial with said tubular layer as a multi-turn helix insulated from said tubular layer.

3.  A heater according to Claim 2, wherein said multi-turn winding (70) is disposed externally around said tubular layer (66), a second tubular layer (74) of magnetic material is disposed around said multi-turn winding, and a conductive shield (60) is disposed around said second layer of magnetic material.

4.  A heater according to Claim 3, wherein said magnetic layers are joined by a magnetic member (78) several skin depths thick at at least one end of the layers.

5.  A heater according to Claim 3, wherein said magnetic layers are joined by magnetic members (75,78) several skin depths thick at both ends of said magnetic layers.

6.  A heater according to any preceding claim, further comprising an electrically conductive rod (64) which is clad with said first magnetic layer.

7.  A heater according to Claim 6, embodied in a soldering iron, and including a soldering iron tip (56) extending from said rod.

8. A heater according to any preceding claim, further comprising, an impedance matching capacitor (76) connected in series with and approximately matching the impedance of said winding.

9. A heater according to Claim 2, wherein said winding (5,27) constitutes part of a return conductor (2) in series with said magnetic layer (13,30) and is surrounded by and insulated from said magnetic layer.

10. A heater according to Claim 1 or Claim 2 or Claim 9, provided with an impedance matching network (Figure 3) having a parallel resonant circuit resonant at the operating frequency of the device, said resonant circuit having a capacitor (38) and an inductor (39), the heater being in series with said inductor.

11. A heater according to Claim 10, wherein said parallel resonant circuit has a Q of not greater than 4.5.

12. A heater according to Claim 11, wherein said heater per se, consisting of the layer of magnetic material and the energising winding thereabout, has a coil Q of approximately 1.5.

13. A heater according to Claim 12, wherein said inductor of the parallel resonant circuit has a coil Q in the range of 50-250.

14. A heater according to any of Claims 10 to 13, wherein said inductor is an iron dust inductor.

15. A heater according to any of Claims 9 to 14, wherein said magnetic material is laminated with and electrically in contact with a further conductive material layer (9,29).

16. A heater according to Claim 15, wherein said magnetic material and conductive material laminate is coaxial with and insulated from said helical winding.

17. A heater according to Claim 16, wherein said conductive material is copper and said magnetic material has a thickness equal to 0.5 to 1.8 skin depths of the magnetic material at the frequency of an alternating substantially constant current source connected to said heater.

**Revendications**

1. Réchauffeur à autorégulation de la température comprenant

une couche (13, 30, 66) d'un matériau magnétique, et en particulier de perméabilité élevée,

un conducteur électrique enroulé sous forme d'un enroulement d'excitation (5, 27, 70) selon une succession de spires (3) autour de ladite couche, soit à l'intérieur soit à l'extérieur, pour induire le courant dans ladite couche quand un courant alternatif est amené à passer dans ledit conducteur, et

des moyens adaptés à appliquer un courant alternatif audit conducteur pour chauffer ledit matériau magnétique à une température se rapprochant de sa température de Curie, caractérisé en ce que l'enroulement conducteur électrique et ladite couche de matériau magnétique sont disposés à proximité étroite de façon que le couplage entre les spires de l'enroulement d'excitation et ladite couche magnétique soit adapté pour limiter le courant passant dans ladite couche à un parcours constitué par un circuit long et répété, l'impédance du réchauffeur étant ainsi fortement augmentée, dans l'intérêt de l'adaptation de l'impédance, du moins au-dessous du point de Curie du matériau magnétique.

2. Réchauffeur selon la revendication 1, caractérisé en ce que la couche de matériau magnétique est configurée sous forme d'un tube et ledit enroulement est enroulé de façon à être coaxial avec ladite couche tubulaire sous forme d'une hélice à spires multiples isolée de ladite couche tubulaire.

3. Réchauffeur selon la revendication 2, caractérisé en ce que l'enroulement multispires (70) est disposé à l'extérieur autour de ladite couche tubulaire (66), une seconde couche tubulaire (74) en un matériau magnétique est disposée autour dudit enroulement multispires, et une blindage conducteur (60) est disposé autour de la seconde couche de matériau magnétique.

4. Réchauffeur selon la revendication 3, caractérisé en ce que lesdites couches magnétiques sont reliées par un élément magnétique (78) d'une épaisseur de plusieurs profondeurs de peau à au moins une extrémité des couches.

5. Réchauffeur selon la revendication 3, caractérisé en ce que les couches magnétiques sont reliées par des éléments magnétiques (75, 78) d'une épaisseur de plusieurs profondeurs de peau aux deux extrémités des couches magnétiques.

6. Réchauffeur selon l'une quelconque des revendications précédentes, caractérisé en ce qu'il comprend une tige électriquement conductrice (64) qui est revêtue par ladite première couche magnétique.

7. Réchauffeur selon la revendication 6, caractérisé en ce qu'il est mis en oeuvre dans un fer à souder et comprend une pointe (56) de fer à souder s'étendant à partir de ladite tige.

8. Réchauffeur selon l'une quelconque des revendications précédentes, caractérisé en ce qu'il comprend en outre un condensateur d'adaptation d'impédance (76) relié en série avec l'impédance dudit enroulement et s'en rapprochant approximativement.

9. Réchauffeur selon la revendication 2, caractérisé en ce que ledit enroulement (527) constitue une partie d'un conducteur de retour (2) qui est en série avec la couche magnétique (13, 30) et est entouré et isolé par ladite couche magnétique.

10. Réchauffeur selon l'une quelconque des revendications 1, 2 ou 9, caractérisé en ce qu'il est muni d'un réseau d'adaptation d'impédance (figure 3) comprenant un circuit résonant parallèle qui résonne à la fréquence de fonctionnement du dispositif, ce circuit résonant comprenant un condensateur (38) et un inducteur (39), et le réchauffeur étant en série avec ledit inducteur.

11. Réchauffeur selon la revendication 10, caractérisé en ce que le coefficient Q du circuit résonant parallèle n'est pas supérieur à 4,5.

12. Réchauffeur selon la revendication 11, caractérisé en ce que ledit réchauffeur en soi, qui consiste dans la couche de matériau magnétique et l'enroulement d'excitation qui l'entoure, comprend un bobinage dont le Q est d'approximativement 1,5.

13. Réchauffeur selon la revendication 12, caractérisé en ce que ledit inducteur du circuit résonant parallèle comprend un bobinage dont le Q est compris entre 50 et 250.

14. Réchauffeur selon l'une quelconque des revendications 10 à 13, caractérisé en ce que ledit inducteur est un inducteur en poudre de fer.

15. Réchauffeur selon l'une quelconque des revendications 9 à 14, caractérisé en ce que le matériau magnétique est stratifié et en contact avec une autre couche de matériau conducteur (9, 29).

16. Réchauffeur selon la revendication 15, caractérisé en ce que ledit matériau magnétique et le stratifié en matériau conducteur sont coaxiaux avec et isolés dudit enroulement helicoïdal.

17. Réchauffeur selon la revendication 16, caractérisé en ce que le matériau conducteur est du cuivre et le matériau magnétique présente une épaisseur comprise entre 0,5 et 1,8 profondeurs de peau du matériau magnétique à la fréquence d'une source de courant sensiblement constant et alternatif reliée audit réchauffeur.

**Patentansprüche**

1. Ein Heizer mit Temperaturselbstregelung, mit

   einer Schicht (13, 30, 66) aus magnetischem Material, insbesondere hoher Permeabilität,

einem elektrischen Leiter, der als speisende Wicklung (5, 27, 70) in einer Folge von Windungen (3) entweder innen oder außen um die Schicht gewickelt ist, um Strom in der Schicht zu induzieren, wenn elektrischer Wechselstrom zum Fließen durch den genannten Leiter gebracht wird, und

Mitteln zur Zuführung eines Wechselstromes zu dem Leiter, um das genannte magnetische Material auf eine Temperatur in der Nähe seiner Curie-Temperatur aufzuheizen, **dadurch gekennzeichnet**, daß die genannte Wicklung des elektrischen Leiters und die genannte Schicht aus magnetischem Material sich in solcher Nähe zueinander befinden, daß die Kopplung zwischen den Windungen der speisenden Wicklung und der genannten magnetischen Schicht den in der genannten Schicht fließenden Strom in einen langen, wiederholt kreisförmigen Pfad zwingen, wodurch die Impedanz des Heizers zum Zwecke der Impedanzanpassung in hohem Maße vergrößert wird, wenigstens unterhalb des Curiepunktes des magnetischen Materials.

2. Heizer nach Anspruch 1, **dadurch gekennzeichnet**, daß die Schicht aus magnetischem Material als Rohr ausgebildet ist und daß die genannte Wicklung koaxial zu der rohrförmigen Schicht als eine Wendel mit mehreren Windungen gewickelt ist, die von der rohrförmigen Schicht isoliert sind.

3. Heizer nach Anspruch 2, **dadurch gekennzeichnet**, daß die Wicklung (70) mit mehreren Windungen außen rund um die rohrförmige Schicht (66) angeordnet ist, daß eine zweite rohrförmige Schicht (74) aus magnetischem Material rund um die Wicklung aus mehreren Windungen angeordnet ist, und daß ein leitender Schirm (60) rund um die zweite Schicht aus magnetischem Material angeordnet ist.

4. Heizer nach Anspruch 3, **dadurch gekennzeichnet,** daß die genannten magnetischen Schichten an wenigstens an einem Ende der Schichten durch ein magnetisches Glied (78) mehrere Hauttiefen dick miteinander verbunden sind.

5. Heizer nach Anspruch 3, **dadurch gekennzeichnet**, daß die magnetischen Schichten an beiden Enden der magnetischen Schichten durch magnetische Glieder (75, 78) mehrere Hauttiefen dick miteinander verbunden sind.

6. Heizer nach einem der vorhergehenden Ansprüche, **gekennzeichnet durch** eine elektrisch leitende Stange (64), die mit der ersten magnetischen Schicht bekleidet ist.

7. Heizer nach Anspruch 6, **dadurch gekennzeichnet**, daß der Heizer in einem Lötkolben angeordnet ist, der eine Lötspitze (56) aufweist, die sich von der Stange aus erstreckt.

8. Heizer nach einem der vorhergehenden Ansprüche, **gekennzeichnet durch** einen Impedanz-Anpassungskondensator (76), der in Reihe mit der genannten Wicklung geschaltet ist und in seiner Impedanz im wesentlichen an die Impedanz der Wicklung angepaßt ist.

9. Heizer nach Anspruch 2, **dadurch gekennzeichnet**, daß die Wicklung (5, 27) Teil eines mit der genannten magnetischen Schicht (13, 30) in Reihe geschalteten Rückführleiters (2) bildet und von der genannten magnetischen Schicht umgeben und isoliert ist.

10. Heizer nach Anspruch 1 oder 2 oder 9, **dadurch gekennzeichnet**, daß er ein Impedanz-Anpaßnetzwerk (Figur 3) aufweist, das einen Parallelresonanzkreis enthält, der auf der Arbeitsfrequenz der Einrichtung schwingt, und daß der genannte Resonanzkreis einen Kondensator (38) und einen Induktor (39) aufweist, wobei der Heizer mit dem genannten Induktor in Reihe geschaltet ist.

11. Heizer nach Anspruch 10, **dadurch gekennzeichnet**, daß der genannte Parallelresonanzkreis ein Q von nicht größer als 4,5 hat.

12. Heizer nach Anspruch 11, **dadurch gekennzeichnet**, daß der Heizer selbst die Schicht aus magnetischem Material bildet und daß die speisende Wicklung darum ein Spulen-Q von näherungsweise 1,5 hat.

13. Heizer nach Anspruch 12, **dadurch gekennzeichnet**, daß der Induktor des Parallelresonanzkreises ein

EP 0 180 301 B1

Spulen-Q im Bereich von 50 - 52 hat.

14. Heizer nach einem der Ansprüche 10 - 13, **dadurch gekennzeichnet**, daß der Induktor ein Eisenstaubinduktor ist.

15. Heizer nach einem der Ansprüche 9 - 14, **dadurch gekennzeichnet**, daß das magnetische Material beschichtet ist und in elektrischem Kontakt mit einer weiteren Schicht (9, 29) aus leitendem Material besteht.

16. Heizer nach Anspruch 15, **dadurch gekennzeichnet**, daß das genannte magnetische Material und das Laminat aus leitendem Material koaxial mit und isoliert zu der wendelförmigen Wicklung verläuft.

17. Heizer nach Anspruch 16, **dadurch gekennzeichnet**, daß das leitende Material Kupfer ist und das genannte magnetische Material eine Dicke von 0,5 - 1,8 Hauttiefen des magnetischen Materials bei der Frequenz einer im wesentlichen konstanten Wechselstromquelle hat, die an den Heizer angeschlossen ist.

13

EP 0 180 301 B1

FIG. 1

FIG. 6

FIG. 2

FIG. 3

FIG. 4

FIG. 5